(19) Europäisches Patentamt
European Patent Office
Office européen des brevets

(11) **EP 1 363 157 A2**

(12) **EUROPÄISCHE PATENTANMELDUNG**

(43) Veröffentlichungstag:
**19.11.2003 Patentblatt 2003/47**

(51) Int Cl.7: **G02F 1/19**

(21) Anmeldenummer: 03008627.6

(22) Anmeldetag: **15.04.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **13.05.2002 DE 10222049**

(71) Anmelder: **Carl Zeiss Laser Optics GmbH**
**73447 Oberkochen (DE)**

(72) Erfinder: **Seifert, Wolfgang**
**73431 Aalen (DE)**

(74) Vertreter: **Heuckeroth, Volker, Dr. et al**
**Witte, Weller & Partner,**
**Patentanwälte,**
**Postfach 105462**
**70047 Stuttgart (DE)**

(54) **Verfahren und Vorrichtung zum variablen Abschwächen der Intensität eines Lichtstrahls**

(57) Die Erfindung betrifft ein Verfahren zum variablen Abschwächen der Intensität ($I_0$) eines Lichtstrahls (12), bei dem man den Lichtstrahl (12e) auf zumindest eine optische Anordnung (14), die zumindest einen für den Lichtstrahl transparenten Körper (16) aufweist, richtet, derart, daß der Lichtstrahl (12e) durch eine Lichteinfallsfläche (20) in den zumindest einen Körper (16) eintritt und durch eine Lichtaustrittsfläche (22) aus dem zumindest einen Körper (16) wieder austritt, wobei der zumindest eine Körper (16) relativ zu dem einfallenden Lichtstrahl (12e) lageverstellt wird, um die Intensität ($I_a$) des austretenden Lichtstrahls (12a) in bezug auf die Intensität ($I_0$) des einfallenden Lichtstrahls (12e) zu ändern. Es wird vorgeschlagen, daß man den Lichtstrahl (12e) in dem zumindest einen Körper (16) zwischen der Lichteinfallsfläche (20) und der Lichtaustrittsfläche (22) auf zumindest eine Grenzfläche (24) zu einem optisch dünneren Medium einfallen läßt, wobei der zumindest eine Körper (16) relativ zu dem einfallenden Lichtstrahl (12e) so lageverstellt wird, daß der Einfallswinkel ($\varphi_e$) des Lichtstrahls auf die Grenzfläche (24) auf einen Winkel eingestellt wird, der kleiner oder größer als oder gleich dem Grenzwinkel der Totalreflexion an dieser Grenzfläche (24) ist. Des weiteren wird eine Vorrichtung insbesondere zur Durchführung des Verfahrens beschrieben (Fig. 1).

Fig.1

EP 1 363 157 A2

**Beschreibung**

Die Erfindung betrifft ein Verfahren zum variablen Abschwächen der Intensität $I_0$ eines Lichtstrahls, bei dem man den Lichtstrahl auf zumindest eine optische Anordnung, die zumindest einen für den Lichtstrahl transparenten Körper aufweist, richtet, derart, dass der Lichtstrahl durch eine Lichteinfallsfläche in den zumindest einen Körper eintritt und durch eine Lichtaustrittsfläche aus dem zumindest einen Körper wieder austritt, wobei der zumindest eine Körper relativ zu dem einfallenden Lichtstrahl lageverstellt wird, um die Intensität $I_a$ des austretenden Lichtstrahls in bezug auf die Intensität $I_0$ des einfallenden Lichtstrahls zu ändern.

Die Erfindung betrifft ferner eine Vorrichtung zum variablen Abschwächen der Intensität eines Lichtstrahls, mit einer optischen Anordnung, die zumindest einen für den Lichtstrahl transparenten Körper aufweist, der eine Lichteinfallsfläche und eine Lichtaustrittsfläche aufweist, und wobei der zumindest eine Körper relativ zu dem einfallenden Lichtstrahl lageverstellbar ist, um die Intensität des austretenden Lichtstrahls in bezug auf die Intensität des einfallenden Lichtstrahls zu ändern.

Ein Verfahren und eine Vorrichtung der zuvor genannten Art sind aus dem Dokument US 4,398,806 bekannt.

Ein solches Verfahren und eine solche Vorrichtung werden beispielsweise bei der Herstellung von Halbleiterchips benötigt, bei der ein Lichtstrahl, der insbesondere von einem Excimer-Laser erzeugt wird, zur Strukturierung des herzustellenden Halbleiterchips verwendet wird. Bei der Strukturierung von Halbleiterchips mit Licht ist es wünschenswert, daß das zur Strukturierung der Halbleiterchips verwendete Licht eine über die Lebensdauer des Gesamtsystems konstante Intensität besitzt. Da aufgrund von Degradationsprozessen im Gesamtsystem die Leistung sich ändern kann, ist ein variabler Abschwächer erforderlich, um die Leistung konstant zu halten. Die Abschwächung erfolgt mittels einer Vorrichtung der eingangs genannten Art, die auch als optischer Abschwächer bezeichnet wird. Treten Verluste der Intensität des von dem Laser erzeugten Lichts auf, beispielsweise infolge einer Alterung der optischen Komponenten des Lasers, wird der Grad der Abschwächung der Intensität reduziert, um eine gleichbleibende Intensität des Lichtes zu erhalten.

Grundsätzlich ist es denkbar, die Intensität des Lichts durch teilweise Absorption in einem Absorbermaterial abzuschwächen. Eine Abschwächung der Intensität des Lichtes durch Absorption hat jedoch den Nachteil, daß sich das Absorbermaterial insbesondere bei intensitätsstarkem Laserlicht stark erhitzt und die optischen Eigenschaften des Absorbermaterials von der Temperatur und damit vom Grad der variablen Abschwächung abhängen. Die optischen Abschwächer sollten strahlungsbeständig sein, insbesondere, weil die Leistungen der derzeit verfügbaren Laser hoch sind und die Leistungen der zukünftigen Laser noch ansteigen werden.

Die aus dem obengenannten Dokument US 4,398,806 bekannte Vorrichtung weist eine optische Anordnung auf, die vier transparente Körper in Form von Keilplatten aufweist. Der von der Lichtquelle kommende Lichtstrahl tritt nacheinander durch alle vier Keilplatten hindurch. Jede Keilplatte weist eine Lichteinfallsfläche und eine Lichtaustrittsfläche auf, wobei der Lichtstrahl zwischen diesen beiden Flächen ohne weitere Strahlablenkung verläuft. Alle vier Keilplatten sind in bezug auf den jeweils einfallenden Lichtstrahl geneigt und verdrehbar, um eine Abschwächung des einfallenden Lichtstrahls durch unterschiedlich starke Fresnel-Reflexe an der jeweiligen Lichteinfallsfläche und Lichtaustrittsfläche der jeweiligen Keilplatte zu bewirken.

Das dort beschriebene Verfahren zur Abschwächung des Lichtstrahls besteht demnach darin, durch Lageverstellung der Keilplatten die Reflexion an zumindest einer der Lichteinfallsflächen zu ändern, d.h. einen je nachdem größeren oder kleineren Anteil des einfallenden Lichts an der Lichteinfallsfläche weg zu reflektieren. Das Prinzip dieses Verfahrens beruht demnach darauf, die Transmission des Lichtstrahls durch die vier Keilplatten durch eine einstellbare Reflexion des Lichtstrahls an der Lichteinfallsfläche zumindest einer der Keilplatten zu verringern, um die gewünschte Abschwächung zu erzielen, wobei die Abschwächung minimal ist, wenn der Lichtstrahl unter dem Brewsterwinkel auf die Grenzfläche trifft.

Der Nachteil dieser Vorrichtung und dieses Verfahrens besteht darin, daß der Lichtstrahl bei starker Abschwächung aus zwei der vier Keilplatten nahezu streifend austritt, was sehr hohe Anforderungen an die Präzision des mechanischen Aufbaus stellt. Aufgrund des streifenden Austritts ist dafür Sorge zu tragen, daß der Lichtstrahl nicht zwischen zwei Keilplatten als Irrstrahl verloren geht. Darüber hinaus ist die maximale Abschwächung des Lichtstrahls mittels dieses bekannten optischen Abschwächers begrenzt. Zur Vermeidung einer von der Wellenlänge und vom Grad der Abschwächung abhängigen Ablenkung oder eines von der Wellenlänge und vom Grad der Abschwächung abhängigen Versatzes des einfallenden Lichtstrahls sind vier Keilplatten nötig, die präzise synchron gedreht werden müssen.

Aus der JP 05 002 141 A ist ferner ein optischer Abschwächer für Laserlicht bekannt, der ein rechtwinkliges gleichschenkliges Prisma aufweist, wobei der zu schwächende Lichtstrahl senkrecht auf eine Kathete des Prismas einfällt, an der Hypotenuse totalreflektiert und durch die andere Kathete im rechten Winkel zu dem einfallenden Lichtstrahl wieder aus dem Prisma austritt. Der Hypotenuse des Prismas ist über einen minimalen Luftspalt beabstandet eine Platte mit einem hohen Brechungsindex benachbart. Die Platte ist zur Variierung des Spaltes zwischen der Platte und der Hypotenuse des Prismas über einen piezoelektrischen Aktuator feinverstellbar. Bei dieser bekannten Vorrichtung und diesem bekannten Verfahren wird der sogenannte optische Tunneleffekt ausgenutzt, nachdem auch ein an einer Grenzfläche totalreflektierter Lichtstrahl teilweise in das optisch dünnere Medium eintritt. Da dieser Effekt jedoch auf wenige Wellenlängen des Lichtes begrenzt ist, hat dieses bekannte Verfahren und diese bekannte Vorrichtung den Nachteil, daß eine derartige mechanische Feinverstellung der Platte in der Größenordnung von wenigen Wellenlängen des verwendeten Lichts sehr aufwendig ist.

Der Erfindung liegt die Aufgabe zugrunde, ein Verfahren und eine Vorrichtung der eingangs genannten Art dahingehend weiterzubilden, daß mit möglichst geringem mechanischem Aufwand eine variabel einstellbare Abschwächung insbesondere für intensive Laserstrahlung ermöglicht wird.

Erfindungsgemäß wird diese Aufgabe hinsichtlich des eingangs genannten Verfahrens dadurch gelöst, daß man den Lichtstrahl in dem zumindest einen Körper zwischen der Lichteinfallsfläche und der Lichtaustrittsfläche auf zumindest eine Grenzfläche zu einem optisch dünneren Medium einfallen läßt, wobei der zumindest eine Körper relativ zu dem einfallenden Lichtstrahl so lageverstellt wird, daß der Einfallswinkel $\varphi_e$ des Lichtstrahls auf die Grenzfläche auf einen Winkel eingestellt wird, der kleiner oder größer als der oder gleich dem Grenzwinkel $\varphi_g$ der Totalreflexion an dieser Grenzfläche ist.

Hinsichtlich der eingangs genannten Vorrichtung wird diese Aufgabe erfindungsgemäß dadurch gelöst, daß der Körper außer der Lichteinfallsfläche und der Lichtaustrittsfläche zumindest eine Grenzfläche zu einem optisch dünneren Medium aufweist, wobei der zumindest eine Körper so lageverstellbar ist, daß der Einfallswinkel $\varphi_e$ des Lichtstrahls auf die Grenzfläche auf einen Winkel einstellbar ist, der kleiner oder größer als der oder gleich dem Grenzwinkel $\varphi_g$ der Totalreflexion an dieser Grenzfläche ist.

Das erfindungsgemäße Verfahren und die erfindungsgemäße Vorrichtung beruhen im Vergleich zum Stand der Technik auf einem anderen Konzept. Anstatt wie bei der bekannten Vorrichtung und dem bekannten Verfahren die Transmission durch den zumindest einen Körper zu maximieren, indem der Lichtstrahl unter dem Brewsterwinkel auf die Grenzfläche trifft, und den Einfallswinkel zum Brewsterwinkel unterschiedlich zu wählen, um die gewünschte Abschwächung zu erhalten, indem der ungenutzte Teil des Lichtstrahls reflektiert wird, geht das erfindungsgemäße Verfahren und die erfindungsgemäße Vorrichtung davon aus, eine Abschwächung durch eine Verminderung der Reflexion an der Grenzfläche zwischen der Lichteinfallsfläche und der Lichtaustrittsfläche des zumindest einen Körpers zu bewirken, wobei der ungenutzte Teil des Lichtstrahls transmittiert wird. Wird der zumindest eine Körper relativ zu dem einfallenden Lichtstrahl so eingestellt, daß der Lichtstrahl auf die Grenzfläche unter einem Einfallswinkel einfällt, der größer oder gleich dem Grenzwinkel der Totalreflexion ist, tritt keine Abschwächung der Intensität des Lichtstrahls auf (abgesehen von vernachlässigbaren Absorptionsverlusten beim Durchtritt durch den Körper und Reflexionsverlusten an der Lichteinfallsfläche aufgrund des Reflexionsvermögens des Körpers, wobei letztere durch eine geeignete Antireflexbeschichtung auf der Lichteinfallsfläche oder durch eine Gestaltung der Form des Körpers derart, daß bei minimaler Abschwächung der Lichtstrahl unter dem Brewsterwinkel auf die Lichteintrittsfläche oder Lichtaustrittsfläche trifft, nahezu ausgeschaltet werden können). Wird der zumindest eine Körper relativ zu dem einfallenden Lichtstrahl so lageverstellt, daß der Lichtstrahl auf die Grenzfläche unter einem Einfallswinkel $\varphi_e$ einfällt, der kleiner als der Grenzwinkel $\varphi_g$ der Totalreflexion ist, wird der Lichtstrahl an dieser Grenzfläche teilweise in das optisch dünnere Medium gebrochen, und der um den gebrochenen Anteil verminderte Anteil der Lichtintensität wird an der Grenzfläche reflektiert und tritt aus der Lichtaustrittsfläche aus. Die Abschwächung der Intensität des Lichtstrahls wird somit im wesentlichen durch eine Brechung des Lichtstrahls an der Grenzfläche erreicht. Die Abschwächung ist dabei variabel einstellbar, d.h. mit kleiner werdendem Einfallswinkel $\varphi_e$ des Lichtstrahls auf die Grenzfläche wird ein abnehmender Anteil der Intensität des Lichtstrahls an der Grenzfläche reflektiert.

Der Vorteil des erfindungsgemäßen Verfahrens und der erfindungsgemäßen Vorrichtung besteht darin, daß der zumindest eine Körper ein Prisma sein kann, von dem beispielsweise eine Oberfläche als die zuvor genannte Grenzfläche, an der wahlweise Totalreflexion oder Teilreflexion und Brechung auftreten kann, genutzt werden kann. Ein solcher optischer Körper läßt sich auch mit geringem mechanischem Aufwand positionieren und insbesondere in bezug auf den einfallenden Lichtstrahl lageverstellen. Er kann insbesondere so positioniert werden, daß sowohl ein streifender Lichteinfall als auch streifender Lichtaustritt des genutzten Strahls vermieden wird. Da der genutzte Strahl reflektiert wird und der Reflexionswinkel des reflektierten Strahls nicht der Dispersion unterliegt, sind bei dem erfindungsgemäßen Verfahren und der erfindungsgemäßen Vorrichtung chromatische Aberrationen geringer als bei dem Verfahren und der Vorrichtung gemäß dem Dokument US 4,398,806.

In einer bevorzugten Ausgestaltung des Verfahrens wird der zumindest eine Körper relativ zu dem einfallenden Lichtstrahl so lageverstellt, daß der Einfallswinkel $\varphi_e$ des Lichtstrahls auf die Grenzfläche auf einen Winkel im Bereich von 0° bis zum Grenzwinkel $\varphi_g$ der Totalreflexion eingestellt wird.

In einer entsprechenden bevorzugten Ausgestaltung der Vorrichtung ist dem zumindest einen Körper ein Stellantrieb zugeordnet, der eine Lageverstellung des zumindest einen Körpers derart ermöglicht, daß der Lichtstrahl auf die Grenzfläche unter einem Einfallswinkel $\varphi_e$ im Bereich zwischen 0° und dem Grenzwinkel $\varphi_g$

der Totalreflexion einfallen kann.

Hierbei ist von Vorteil, daß der Bereich der insgesamt möglichen Abschwächung zwischen einer im wesentlichen verschwindenden Abschwächung (Totalreflexion an der Grenzfläche) und einer maximalen Abschwächung vollständig ausgenutzt werden kann.

In einer weiteren bevorzugten Ausgestaltung des Verfahrens wird der Lichtstrahl als linear in der Einfallsebene polarisiertes Licht auf die Grenzfläche einfallen gelassen, und der Körper wird relativ zu dem einfallenden Lichtstrahl so lageverstellt, daß der Einfallswinkel auf einen Winkel im Bereich von dem Grenzwinkel $\varphi_g$ der Totalreflexion bis zu dem Brewster-Winkel $\varphi_p$ an dieser Grenzfläche eingestellt wird.

Hierbei ist von besonderem Vorteil, daß eine Abschwächung der Intensität des Lichtstrahls über einen Gesamtbereich von nahezu 0 % bis 100 % variabel einstellbar ist. Dabei macht man sich das physikalische Gesetz zunutze, daß linear in der Einfallsebene polarisiertes Licht an einer Grenzfläche nicht reflektiert wird, wenn es unter dem Brewster-Winkel $\varphi_p$ auf die Grenzfläche einfällt. Darüber hinaus wird der Vorteil erzielt, daß der Bereich der Lageverstellung des zumindest einen Körpers auf einen kleinen Verstellweg begrenzt werden kann, da der Brewster-Winkel von dem Grenzwinkel der Totalreflexion beispielsweise bei einem Glas-Luftübergang nur um etwa 10° beabstandet ist. Dadurch ist es möglich, den Körper bei entsprechend gewählter Geometrie so zu positionieren, daß einfallender und austretender Lichtstrahl im wesentlichen senkrecht auf der Lichteinfalls- bzw. Lichtaustrittsfläche stehen.

Bei der erfindungsgemäßen Vorrichtung ist es dabei bevorzugt, wenn dem zumindest einen Körper ein Polarisator oder ein Element zum Drehen der Polarisationsebene vorgeschaltet ist, der den einfallenden Lichtstrahl linear parallel zur Einfallsebene polarisiert.

Sofern eine Lichtquelle verwendet wird, deren Licht nicht linear polarisiert ist, oder deren Licht in einer Ebene schräg zur Einfallsebene polarisiert ist, hat diese Maßnahme den Vorteil, daß gewährleistet ist, daß der Lichtstrahl wie zuvor beschrieben als linear in der Einfallsebene polarisiertes Licht auf die Grenzfläche einfallen kann. Als Element zur Drehung der Polarisationsebene kann beispielsweise eine $\lambda/2$-Platte verwendet werden.

In einer weiteren bevorzugten Ausgestaltung des Verfahrens wird der zumindest eine Körper so lageverstellt, daß der aus der Lichtaustrittsfläche austretende Lichtstrahl seine räumliche Lage relativ zu dem einfallenden Lichtstrahl nicht oder kaum verändert.

Diese Maßnahme hat den Vorteil, daß sich bei der Einstellung des gewünschten Grades der Abschwächung die Lage des austretenden Lichtstrahls relativ zu dem einfallenden Lichtstrahl nicht verändert, ohne daß hierzu zusätzliche optische Bauelemente erforderlich sind, die bei der Lageverstellung des zumindest einen Körpers mit verstellt werden müssen. Auf diese Weise kann die erfindungsgemäße Vorrichtung sehr kostengünstig aufgebaut werden.

Dabei kann es in einer bevorzugten Ausgestaltung des Verfahrens vorgesehen sein, daß der zumindest eine Körper um eine quer zur Einfallsebene verlaufende Drehachse verschwenkt und quer zu dieser Drehachse translatorisch verschoben wird, um die zuvor erwähnte räumliche Invarianz des ausfallenden Lichtstrahls in bezug auf den einfallenden Lichtstrahl zu erreichen.

Entsprechend ist es in diesem Fall bevorzugt, wenn der zumindest eine Körper um eine quer zur Einfallsebene des Lichtstrahls verlaufende Drehachse drehbar und translatorisch beweglich ist.

Besonders bevorzugt ist es jedoch, wenn bei dem erfindungsgemäßen Verfahren der zumindest eine Körper ausschließlich um eine quer zur Einfallsebene verlaufende Drehachse gedreht wird, die so gewählt ist, daß der aus der Lichtaustrittsfläche austretende Lichtstrahl seine räumliche Lage relativ zu dem einfallenden Lichtstrahl nicht verändert.

Bei der erfindungsgemäßen Vorrichtung ist dazu bevorzugt vorgesehen, daß der zumindest eine Körper um eine quer zur Einfallsebene verlaufende Drehachse drehbar ist, die so gewählt ist, daß der aus der Lichtaustrittsfläche austretende Lichtstrahl seine räumliche Lage relativ zu dem einfallenden Lichtstrahl nicht ändert.

Diese Maßnahme hat den Vorteil, daß der Stellantrieb als reiner Drehantrieb ausgestaltet werden kann, d.h. daß auf einen aufwendigeren Stellantrieb verzichtet werden kann, der in der Lage ist, sowohl eine Drehung als auch eine translatorische Bewegung des zumindest einen Körpers zu bewirken. Diese Ausgestaltung geht von dem Grundgedanken aus, daß sich jede Bewegung eines Körpers, die sich aus einer Drehung um eine Drehachse und einer translatorischen Bewegung zusammensetzt, durch eine Drehung um eine entsprechend gewählte Drehachse realisieren läßt.

Daneben kann es ebenfalls bevorzugt sein, wenn der aus der Lichtaustrittsfläche austretende Lichtstrahl mittels eines weiteren optischen Körpers in bezug auf den einfallenden Lichtstrahl in Abhängigkeit von der Lageverstellung des ersten Körpers in bezug auf seine Lage und/oder in bezug auf die Symmetrie der Abschwächung des Lichtstrahls korrigiert wird.

Dies kann beispielsweise dadurch realisiert werden, daß dem zumindest einen Körper, der zum Ändern der Intensität des Lichtstrahls verwendet wird, ein weiterer Körper in Form eines Umlenkprismas, eines Spiegels oder dergleichen nachgeschaltet wird, der dann in Abhängigkeit von der Lageverstellung des zumindest einen ersten Körpers entsprechend positioniert wird, um eine unveränderte räumliche Lage des austretenden Lichtstrahls in bezug auf den einfallenden Lichtstrahl zu erhalten, oder um den Vorteil zu erreichen, daß ein Lichtstrahl mit endlicher Divergenz symmetrisch abgeschwächt wird.

In einer weiteren bevorzugten Ausgestaltung der Vorrichtung ist der zumindest eine Körper ein Prisma.

Ein Prisma stellt ein konstruktiv einfaches optisches Element dar, das sich besonders für die vorliegende Erfindung eignet.

Dabei ist es besonders bevorzugt, wenn der zumindest eine Körper ein Prisma konstanter Ablenkung ist.

Mit einem Prisma konstanter Ablenkung läßt sich auf konstruktiv besonders einfache Weise die Vorrichtung gemäß einer der zuvor genannten Ausgestaltungen realisieren, um zu erreichen, daß der aus der Lichtaustrittsfläche austretende Lichtstrahl in bezug auf den einfallenden Lichtstrahl sich bei der Lageverstellung des zumindest einen Körpers nicht oder kaum räumlich lageverändert.

In einer weiteren bevorzugten Ausgestaltung ist der zumindest eine Körper ein rechtwinkliges Prisma, vorzugsweise ein gleichschenklig-rechtwinkliges Prisma.

Die Verwendung eines derartigen Prismas für die vorliegende Erfindung hat den Vorteil, daß ein solches Prisma einerseits ein Prisma konstanter Ablenkung darstellt, bei dem sich bei geeigneter Wahl der Drehachse die räumliche Lage des aus der Lichtaustrittsfläche austretenden Lichtstrahl in bezug auf den einfallenden Lichtstrahl nicht ändert, und daß mit nur einem Prisma sich die erfindungsgemäße Vorrichtung und das erfindungsgemäße Verfahren realisieren läßt.

Für ein rechtwinkliges, insbesondere gleichschenklig-rechtwinkliges Prisma der zuvor genannten Ausgestaltung wird in einer weiter bevorzugten Ausgestaltung vorzugsweise ein Material mit einem Brechungsindex von größer oder gleich $2^{0,5}$ verwendet.

Bei dieser Wahl des Materials für das zumindest eine Prisma beträgt der Grenzwinkel $\varphi_g$ der Totalreflexion kleiner oder gleich 45°. Auf diese Weise kann ein solches Prisma für die Zwecke der Erfindung besonders vorteilhaft so positioniert werden, daß der Lichtstrahl senkrecht auf die Hypotenuse des Prismas einfällt und senkrecht aus dieser parallel versetzt wieder austritt (d.h. Lichteinfallsfläche und Lichtaustrittsfläche fallen zusammen), wenn keine Abschwächung der Intensität des Lichtstrahls gewünscht ist, und daß das Prisma in bezug auf den einfallenden Lichtstrahl nur um einen Winkel in einem geringen Winkelbereich schräg gestellt werden muß, um die gewünschte Intensität $I_a$ des austretenden Lichtstrahls einzustellen; insbesondere wenn nach einer der vorher genannten Ausgestaltungen verfahren wird, nämlich daß der Einfallswinkel des Lichtstrahls auf die Grenzfläche zwischen dem Brewsterwinkel und dem Grenzwinkel der Totalreflexion, der auch überschritten werden kann, variiert wird. Ein streifender Lichteinfall bzw. Lichtaustritt wird somit vermieden.

In einer weiteren bevorzugten Ausgestaltung ist die Lichteinfallsfläche mit einer Antireflexbeschichtung oder Antireflexmikrostrukturierung versehen, oder sie weist eine derartige Formgebung auf, daß sie zum einfallenden Lichtstrahl unter dem Brewsterwinkel angeordnet ist.

Mit solchen Ausgestaltungen können Lichtverluste an der Lichteinfallsfläche minimiert werden, und andererseits können insbesondere bei senkrechtem Einfall des Lichtstrahls auf die Lichteinfallsfläche störende Retroreflexe vermieden werden.

In einer weiteren bevorzugten Ausgestaltung ist die Grenzfläche mit einer Beschichtung oder Mikrostrukturierung zur Modifikation des Verlaufs der Kurve des Reflexionskoeffizienten R in Abhängigkeit vom Einfallswinkel an der Grenzfläche versehen.

Der Vorteil dieser Maßnahme besteht darin, daß beispielsweise der Reflexionskoeffizient $R_\perp$ für senkrecht in der Einfallsebene linear polarisiertes Licht, der bei Fehlen einer derartigen Beschichtung oder Mikrostrukturierung stets ungleich Null ist, für definierte Einfallswinkel $\varphi_e$, beispielsweise für $\varphi_e = 0°$ auf nahe oder gleich Null gesetzt werden kann. Dadurch wird der Vorteil erzielt, daß beispielsweise mit senkrecht in der Einfallsebene linear polarisiertem Licht gearbeitet werden kann, und dabei der gesamte Bereich von Einfallswinkeln von 0° bis zum Grenzwinkel $\varphi_g$ der Totalreflexion ausgenutzt werden kann. Darüber hinaus kann die Modifikation auch darin bestehen, den zum Grenzwinkel $\varphi_g$ der Totalreflexion hin sehr steil werdenden Kurvenverlauf des Reflexionskoeffizienten flacher zu gestalten, um den Gradienten der Abschwächung in Abhängigkeit von der Lageverstellung des Körpers zu verringern. Als Beschichtung kann hier ebenfalls eine Antireflexbeschichtung vorgesehen sein, während eine Mikrostrukturierung der Grenzfläche beispielsweise mit oder ohne Antireflexwirkung durch optische Gitter realisiert werden kann.

In einer weiteren bevorzugten Ausgestaltung besteht der zumindest eine Körper aus Calciumfluorid.

Calciumfluorid hat den Vorteil, daß es einen Brechungsindex von größer als $2^{0,5}$ bei den Laserwellenlängen 248 nm, 193 nm und 157 nm besitzt und sich daher als Material für das zuvor genannte gleichschenklig-rechtwinklige Prisma für einen senkrechten Lichteinfall von Excimer-Laserlicht durch die Hypotenuse und Totalreflexion bei einem Einfallswinkel des Lichtstrahls auf die Grenzfläche von 45° eignet.

Es versteht sich jedoch, daß anstelle eines rechtwinkligen oder gar gleichschenklig-rechtwinkligen Prismas auch andere Prismen mit konstanter Ablenkung für die vorliegende Erfindung verwendet werden können, beispielsweise Penta-Prismen, Wollaston-Prismen, Prismen nach Bauernfeind, oder auch eine Anordnung nach Löwe aus zwei im Gegensinn drehbaren Prismen nach Bauernfeind oder eine Anordnung einer Mehrzahl solcher Prismen. Darüber hinaus versteht es sich, daß bei einer Verwendung eines derartigen Prismas, wie bereits erwähnt, die Lichteinfallsfläche und die Lichtaustrittsfläche durch die selbe Grenzfläche des Prismas gebildet sein können, und daß der zumindest eine Körper weitere Grenzflächen aufweisen kann, an denen der Lichtstrahl totalreflektiert oder durch Variation des Einfallswinkels nur teilweise reflektiert wird.

Weitere Vorteile und Merkmale ergeben sich aus der nachfolgenden Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:

Fig. 1 eine schematische Darstellung einer Vorrichtung zum variablen Abschwächen der Intensität eines Lichtstrahls in Seitenansicht in einer ersten Betriebsstellung;

Fig. 2 die Vorrichtung in Fig. 1 in einer zweiten Betriebsstellung;

Fig. 3 die Vorrichtung in Fig. 1 und 2 in einer dritten Betriebsstellung;

Fig. 4 eine kombinierte Darstellung der beiden Betriebsstellungen der Vorrichtung in Fig. 1 und 3;

Fig. 5 eine optische Anordnung zur Verwendung in der Vorrichtung in Fig. 1 gemäß einem weiteren Ausführungsbeispiel;

Fig. 6 eine optische Anordnung zur Verwendung in der Vorrichtung in Fig. 1 gemäß einem noch weiteren Ausführungsbeispiel; und

Fig. 7 ein Diagramm, in dem der Reflexionskoeffizient R als Funktion des Einfallswinkels $\varphi_e$ des Lichtstrahls beim Übergang von einem optisch dichteren Medium in ein optisch dünneres Medium dargestellt ist.

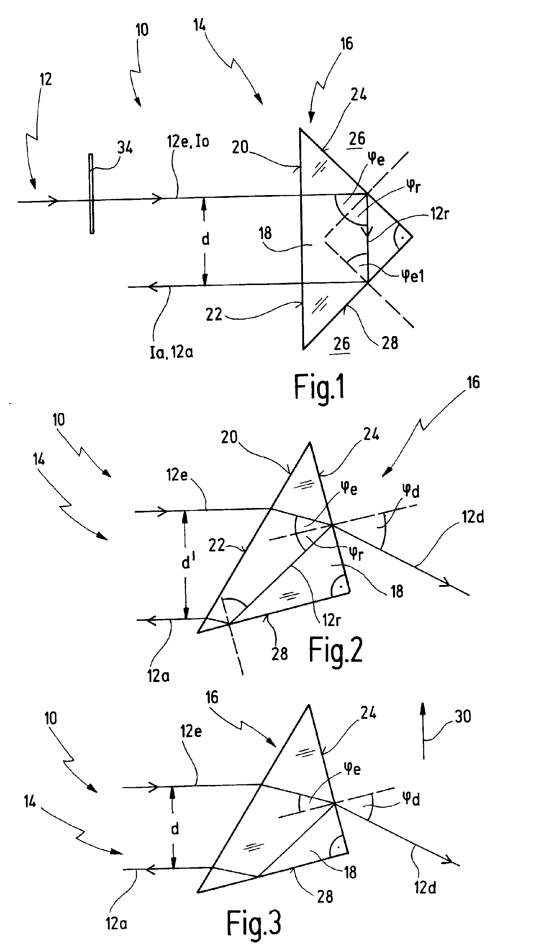

In Fig. 1 bis 4 ist eine mit dem allgemeinen Bezugszeichen 10 versehene Vorrichtung zum variablen Abschwächen der Intensität eines Lichtstrahls 12 schematisch dargestellt.

Der Lichtstrahl 12 ist ein Laserlichtstrahl, der beispielsweise von einem Excimer-Laser erzeugt wurde.

Die Vorrichtung 10 weist eine optische Anordnung 14 auf, die zumindest einen Körper 16, der für den Lichtstrahl 12 transparent ist, aufweist.

Der Körper 16 ist ein Prisma 18 mit konstanter Ablenkung, das im vorliegenden Ausführungsbeispiel ein gleichschenklig-rechtwinkliges Prisma ist.

Der Körper 16 weist eine Lichteinfallsfläche 20 auf, durch die der einfallende Lichtstrahl 12e in den Körper 16 eintritt, sowie eine Lichtaustrittsfläche 22, durch die der geschwächte Lichtstrahl 12a, der in der Folge auch als austretender Lichtstrahl bezeichnet wird, aus dem Körper 16 wieder austritt. In dem gezeigten Ausführungsbeispiel sind die Lichteinfallsfläche 20 und die Lichtaustrittsfläche 22 durch die selbe Oberfläche des Prismas 18 gebildet, und zwar durch seine Hypotenuse.

Der Körper 16 weist zwischen der Lichteinfallsfläche 20 und der Lichtaustrittsfläche 22 weiterhin zumindest eine Grenzfläche 24 zu einem optisch dünneren Medium 26 auf, das den Körper 16 ganz umgeben kann oder auch nur im Bereich der Grenzfläche 24 vorhanden ist. Die Grenzfläche 24 wird durch eine Kathete des Prismas 18 gebildet. Weiterhin weist der Körper 16 eine zweite Grenzfläche 28 zu dem optisch dünneren Medium 26 hin auf.

Der Körper 16 in Form des Prismas 18 weist ein Material mit dem Brechungsindex $n_1$ auf. Das optisch dünnere Medium besitzt den Brechungsindex $n_2$. An der Grenzfläche 24 gilt das Snellius'sche Brechungsgesetz:

$$n_1 \sin \varphi_e = n_2 \sin \varphi_d,$$

wobei $\varphi_e$ der Einfallswinkel des Lichtstrahls 12e auf die Grenzfläche 24 und $\varphi_d$ der Brechungswinkel des gebrochenen Lichtstrahls 12d beim Übergang des Lichtstrahls 12e in das optisch dünnere Medium 26 ist (vgl. Fig. 2).

An der Grenzfläche 24 tritt Totalreflexion des Lichtstrahls 12e auf, wenn gilt:

$$\sin \varphi_e \geq \frac{n_2}{n_1}.$$

Unter der Annahme, daß das optisch dünnere Medium 26 Luft mit einem Brechungsindex $n_2 = 1$ ist, tritt bei der Konfiguration mit senkrechtem Lichteinfall in die Lichteinfallsfläche 20 und damit einem Einfallswinkel $\varphi_e = 45°$ Totalreflexion auf, wenn $n_1 \geq 2^{0,5}$. Für den Fall $n_1 = 2^{0,5}$ beträgt der Grenzwinkel $\varphi_g$ der Totalreflexion an der Grenzfläche 24 45°.

Als Material für den Körper 16, das die Bedingung $n_1 \geq 2^{0,5}$ erfüllt, und dies bei Lichtwellenlängen von 248 nm, 193 nm und 157 nm, die Wellenlängen eines Excimer-Lasers sind, kann vorzugsweise Calciumfluorid gewählt werden.

Für den an der Grenzfläche 24 reflektierten Lichtstrahl 12r gilt $\varphi_r = \varphi_e$, wobei $\varphi_r$ der Reflexionswinkel ist. Aufgrund der Ausgestaltung des Prismas 18 als gleichschenklig-rechtwinkliges Prisma trifft bei senkrechtem Lichteinfall in die Lichteinfallsfläche 20 der an der Grenzfläche 24 reflektierte Lichtstrahl 12r gemäß Fig. 1 wiederum unter einem Einfallswinkel von 45° auf die zweite Grenzfläche 28 und wird an dieser ebenfalls totalreflektiert.

Der aus der Lichtaustrittsfläche 22 austretende Lichtstrahl 12a weist in diesem Fall eine Intensität $I_a$ auf, die gegenüber der Intensität $I_0$ des einfallenden Lichtstrahls 12e mit Ausnahme von Reflexionsverlusten an der Lichteinfallsfläche 20 und Absorptionsverlusten in dem Körper 16, die jedoch vernachlässigbar sind, im wesentlichen unverändert ist. Die Lichteinfallsfläche 20 kann zur Vermeidung solcher Reflexionsverluste und zur Vermeidung von Retroreflexen mit einer insbesondere auf senkrechten Lichteinfall optimierten Antireflexbeschichtung versehen sein.

Um eine Abschwächung der Intensität $I_a$ des austretenden Lichtstrahls 12a gegenüber der Intensität $I_0$ des einfallenden Lichtstrahls 12e zu bewirken, ist der Körper 16 in bezug auf den einfallenden Lichtstrahl 12e lageverstellbar, wie in Fig. 2 dargestellt ist. Dazu ist dem Körper 16 ein nicht dargestellter Stellantrieb zugeordnet, der eine Lageverstellung des Körpers 16 in bezug auf den einfallenden Lichtstrahl 12e, dessen Lage unverändert bleibt, so ermöglicht, daß der einfallende Lichtstrahl 12e unter einem Einfallswinkel $\varphi_e < \varphi_g$ auf die Grenzfläche 24 einfällt. Da nunmehr der Grenzwinkel $\varphi_g$ der Totalreflexion unterschritten ist, wird ein Teil des Lichtstrahls 12e durch die Grenzfläche 24 in das optisch dünnere Medium 26 als Lichtstrahl 12d gebrochen. Ein Teil 12r des einfallenden Lichtstrahls 12e wird jedoch weiterhin an der Grenzfläche 24 reflektiert, an der zweiten Grenzfläche 28 weiterhin totalreflektiert, und tritt dann als um den durch die Grenzfläche 24 in das optisch dünnere Medium 26 durchgelassenen Anteil des Lichtstrahls 12e geschwächter Lichtstrahl 12a aus. Die Intensität $I_a$ des austretenden Lichtstrahls 12a ist somit gegenüber der Intensität $I_0$ des einfallenden Lichtstrahls 12e abgeschwächt. Der gebrochene Lichtstrahl 12d wird durch geeignete Maßnahmen unschädlich gemacht, während der Lichtstrahl 12a als Nutzstrahl dient.

Der Stellantrieb ist vorzugsweise so ausgebildet, daß der Körper 16 in bezug auf den einfallenden Lichtstrahl 12e über einen Bereich lageverstellbar ist, daß der Einfallswinkel $\varphi_e$ des einfallenden Lichtstrahls 12e auf die Grenzfläche 24 im Bereich zwischen nahe 0° und dem Grenzwinkel $\varphi_g$ der Totalreflexion eingestellt werden kann.

An der zweiten Grenzfläche 28 gilt für den Einfallswinkel $\varphi_{e1}$, daß dieser stets größer ist als der Grenzwinkel $\varphi_g$ der Totalreflexion, wenn der Einfallswinkel $\varphi_e$ des einfallenden Lichtstrahls 12e auf die Grenzfläche 24 kleiner ist als der Grenzwinkel $\varphi_g$ der Totalreflexion, so daß unter diesen Bedingungen an der Grenzfläche 28 stets Totalreflexion auftritt. Es kann jedoch auch in Betracht gezogen werden, die Grenzfläche 28 zu verspiegeln oder durch einen mitbewegten Spiegel zu ersetzen.

Es können jedoch auch die Rollen der Grenzflächen 24 und 28 bei umgekehrter Drehrichtung des Körpers 16 vertauscht werden, d.h. an der Grenzfläche 28 wird durch Lageverstellung des Körpers 16 ein Teil des einfallenden Lichtstrahls 12e in das optisch dünnere Medium 26 durchgelassen, während an der Grenzfläche 24 stets reflektiert wird.

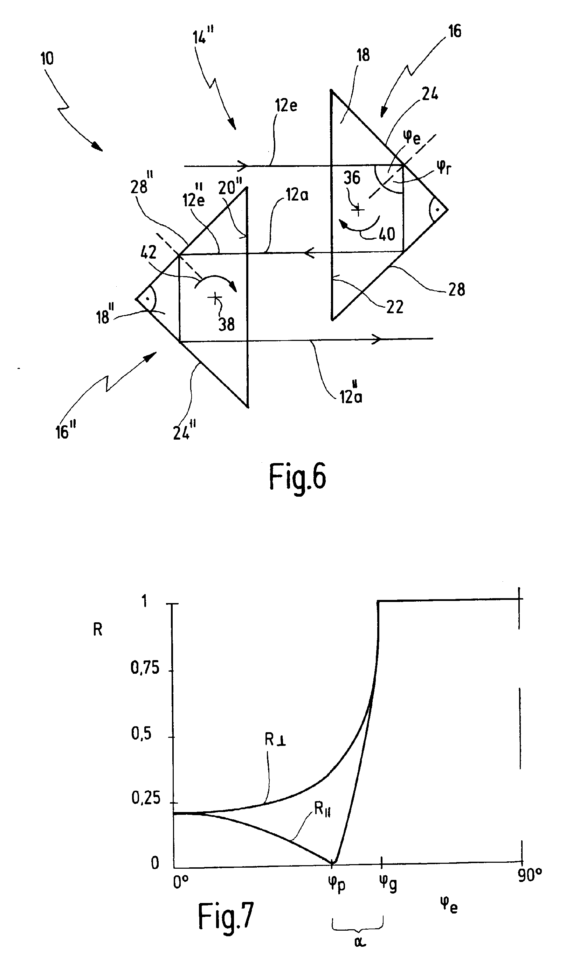

Wenn der Lichtstrahl 12 unpolarisiert oder zumindest nicht linear parallel zur Einfallsebene auf die Grenzfläche 24 polarisiert ist, kann aufgrund der Fresnel'schen Reflexionsgesetze keine Abschwächung des Lichtstrahls 12 um 100 % erreicht werden, d.h. der austretende Lichtstrahl 12a hat stets eine endliche Intensität $I_a$, wie sich aus Fig. 7 ergibt, in der der Reflexionskoeffizient R als Funktion des Einfallswinkels $\varphi_e$ dargestellt ist. Für die senkrecht zur Einfallsebene polarisierte Komponente des Lichtstrahls gilt nämlich auch bei einem Einfallswinkel $\varphi_e = 0°$, daß eine Reflexion an der Grenzfläche 24 auftritt, die durch das Reflexionsvermögen des Materials des Körpers 16 bestimmt ist. Durch eine entsprechende Antireflexbeschichtung an der Grenzfläche 24 könnte dieses auf nahe Null gesenkt werden.

Die in Fig. 7 gezeigten Kurven für $R_\perp$ und $R_\parallel$ können durch eine geeignete Beschichtung, beispielsweise eine Antireflexbeschichtung, an der Grenzfläche 24 modifiziert werden. Beispielsweise kann die Beschichtung so beschaffen sein, daß $R_1 = 0$ für definierte Einfallswinkel $\varphi_e$ mit $0° < \varphi_e \le \varphi_g$ gilt. Auch könnte die Kurve für $R_\perp$ oder $R_\parallel$ im Bereich $\varphi_p \le \varphi_e \le \varphi_g$ dadurch abgeflacht werden.

Um eine Abschwächung des Lichtstrahls 12 um sogar 100 % zu erreichen, kann jedoch vorzugsweise so vorgegangen werden, daß man den Lichtstrahl 12e als linear in der Einfallsebene polarisiertes Licht auf die Grenzfläche 24 einfallen läßt. Wie sich nämlich wiederum aus Fig. 7 ergibt, existiert ein Winkel $\varphi_p$, der sogenannte Brewster-Winkel, bei dem parallel linear in der Einfallsebene polarisiertes Licht an der Grenzfläche 24 nicht reflektiert wird, wenn $\varphi_e = \varphi_p$. Wenn man den Lichtstrahl 12e auf die Grenzfläche 24 des Körpers 16 daher als linear in der Einfallsebene polarisiertes Licht einfallen läßt, reicht eine Verstellung des Einfallswinkels $\varphi_e$ in einem Bereich $\alpha$ (vgl. Fig. 7), der der Differenz aus dem Grenzwinkel $\varphi_g$ der Totalreflexion und dem Brewster-Winkel $\varphi_p$ entspricht, aus, um eine Abschwächung der Intensität $I_0$ des Lichtstrahls 12 von etwa 0 % ($\varphi_e \ge \varphi_g$) und 100 % ($\varphi_e = \varphi_p$) zu erreichen.

Falls der Lichtstrahl 12 nicht ohnehin bereits parallel zur Einfallsebene der Grenzfläche 24 linear polarisiert ist, kann dem Körper 16 gemäß Fig. 1 ein Polarisator 34 zugeordnet sein, der den Lichtstrahl 12 entsprechend linear polarisiert. Wenn der Lichtstrahl 12 zwar linear polarisiert ist, jedoch in einer Ebene, die nicht die Einfallsebene ist, kann anstelle des Polarisators 34 ein Element zum Drehen der Polarisationsebene, beispielsweise eine $\lambda/2$-Platte verwendet werden.

Wieder mit Bezug auf Fig. 2 ist dort dargestellt, daß der gegenüber dem einfallenden Lichtstrahl 12e in der Intensität abgeschwächte austretende Lichtstrahl 12a parallel zu diesem versetzt ist, jedoch ist der Versatz d' zwischen dem einfallenden Lichtstrahl 12e und dem austretenden Lichtstrahl 12a größer als der Versatz d in Fig. 1. Der Körper 16 wurde dabei aus der in Fig. 1 gezeigten Lage um den Auftreffpunkt des einfallenden Lichtstrahls 12e auf die Grenzfläche 24 gedreht, um den Einfallswinkel $\varphi_e$ auf den in Fig. 2 dargestellten Winkel einzustellen.

Um zu gewährleisten, daß sich der austretende Lichtstrahl 12a in bezug auf den einfallenden Lichtstrahl 12e bei der Lageverstellung des Körpers 16 zur Einstellung der gewünschten Intensität des Lichtstrahls 12a nicht räumlich ändert, wird der Körper 16 gemäß Fig. 3 zusätzlich zu der Drehung um die quer zur Einfallsebene des einfallenden Lichtstrahls 12e verlaufende Drehachse gemäß einem Pfeil 30 translatorisch bewegt. Bei der translatorischen Bewegung des Körpers 16 in Richtung des Pfeiles 30 wird der Einfallswinkel $\varphi_e$ nicht verändert, jedoch wird hierdurch der Versatz d des austretenden Lichtstrahls 12a in bezug auf den einfallenden Lichtstrahl 12e gemäß Fig. 1 wieder hergestellt.

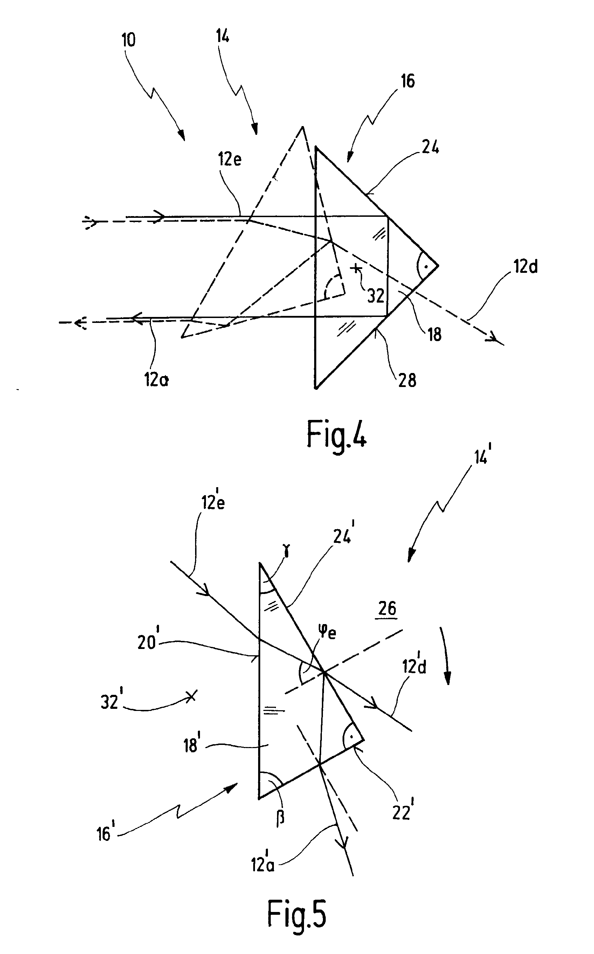

Anstatt den Körper 16 durch eine Überlagerung oder Hintereinanderausführung einer Drehung und einer translatorischen Bewegung lagezuverstellen, ist es bevorzugt, den Körper 16 ausschließlich um eine quer zur Einfallsebene verlaufende Drehachse 32 zu verschwenken, die so gewählt ist, daß der austretende Lichtstrahl 12a in bezug auf den einfallenden Lichtstrahl 12e räumlich nicht lageverändert ist, wie in Fig. 4 dargestellt ist. Fig. 4 stellt den Übergang der Position des Körpers 16 in Fig. 1 (durchgezogene Linien) zur in Fig. 3 dargestellten Position (unterbrochene Linien) dar, wobei zur besseren Übersichtlichkeit die Positionen in durchgezogenen Linien und die Position in unterbrochenen Linien geringfügig seitlich versetzt dargestellt wurden. Bei einer Drehung des Körpers 16 um die Drehachse 32, die in dem gezeigten Ausführungsbeispiel auf der Mittelsenkrechten auf der Hypothenuse und in einem Abstand von der Hypothenuse liegt, der etwa das 0,33fache der Länge der Hypothenuse beträgt, wird mit anderen Worten ausgehend von der in durchgezogenen Linien dargestellten Lage des Körpers 16 nicht die in unterbrochenen Linien dargestellte Position erreicht, sondern eine gegenüber letzterer seitlich nach rechts unten versetzte Lage.

In Fig. 5 ist ein weiteres Ausführungsbeispiel einer optischen Anordnung 14' mit einem Körper 16' dargestellt, die ebenfalls in der Vorrichtung 10 zur variablen Abschwächung der Intensität des Lichtstrahls 12 verwendet werden kann. Der Körper 16' ist wiederum ein Prisma mit konstanter Ablenkung, und zwar ein sogenanntes Prisma nach Bauernfeind, das ein rechtwinkliges, jedoch nicht gleichschenkliges Prisma ist. Die Hypotenuse des Prismas 18' bildet mit der einen Kathete einen Winkel $\beta = 60°$, und mit der anderen Kathete einen Winkel $\gamma = 30°$. Dieses Prisma 18' wird so benutzt, daß die Lichteinfallsfläche 20' die Hypotenuse des Prismas 18' ist, und die Lichtaustrittsfläche 22' eine Kathete. Die andere Kathete des Prismas 18' dient als die Grenzfläche 24' zu dem optisch dünneren Medium 26', an der je nach Einstellung des Einfallswinkels $\varphi_e$ durch Lageverstellung des Körpers 16' relativ zu dem einfallenden Lichtstrahl 12e' Totalreflexion oder nur teilweise Reflexion auftritt.

Die Lageverstellung des Körpers 16' erfolgt hierbei um eine Drehachse 32', die quer zur Einfallsebene des einfallenden Lichtstrahls 12e' verläuft, und die wiederum so gewählt ist, daß der austretende Lichtstrahl 12a' seine räumliche Lage in bezug auf den einfallenden Lichtstrahl 12e' bei der Lageverstellung des Körpers 16' zur Einstellung der gewünschten Abschwächung nicht verändert.

Eine weitere optische Anordnung 14'', die in der Vorrichtung 10 zum variablen Abschwächen der Intensität des Lichtstrahls 12 verwendet werden kann, ist in Fig. 6 dargestellt. Die optische Anordnung 14'' weist einen ersten transparenten Körper 16 auf, der mit dem transparenten Körper 16 in Fig. 1 bis 4 identisch ist, und einen zweiten transparenten Körper 16'', der ebenfalls durch ein gleichschenklig-rechtwinkliges Prisma 18'' ausgebildet ist, das mit seiner Hypotenuse der Hypotenuse des Prismas 18 gegenüberstehend und versetzt angeordnet ist. Die Hypotenusen verlaufen dabei parallel zueinander.

Der aus dem Körper 16 durch die Lichtaustrittsfläche 22 austretende Lichtstrahl 12a bildet gleichzeitig den einfallenden Lichtstrahl 12e'', der durch die Lichteintrittsfläche 20'' in den Körper 16'' einfällt. Der aus dem Körper 16'' austretende Lichtstrahl ist mit dem Bezugszeichen 12a'' versehen.

Der Körper 16'' hat vorrangig die Funktion, den aus dem ersten Körper 16 austretenden Lichtstrahl 12a in bezug auf den einfallenden Lichtstrahl 12e in Abhängigkeit von der Lageverstellung des ersten Körpers 16 lagezukorrigieren, so daß unabhängig von der Lageverstellung des Körpers 16 der Versatz zwischen dem in die Lichteinfallsfläche 20 einfallenden Lichtstrahl 12e und dem Lichtstrahl 12a'' konstant bleibt.

Wird der Körper 16 um die Drehachse 36 und der Körper 16'' um die Drehachse 38 gemäß Pfeilen 40 und 42 aus der in Fig. 6 dargestellten Lage entsprechend Fig. 2 verschwenkt, wird die Totalreflexion des Lichtstrahls 12e an der Grenzfläche 24 des Körpers 16 und die Totalreflexion des Lichtstrahls 12e'' an der Grenzfläche 24'' unterbrochen, so daß der austretende Lichtstrahl 12a zunächst an der Grenzfläche 24 eine Schwächung erfahren hat, und als Lichtstrahl 12e'' eine zusätzliche Schwächung an der Grenzfläche 24'' erfahren hat.

Durch die geeignete Wahl der Drehachsen 36 und 38 kann erreicht werden, daß der letztlich austretende Lichtstrahl 12a'' seine Lage in bezug auf den einfallenden Lichtstrahl 12e nicht ändert und/oder die Abschwächung eines divergenten Lichtstrahls symmetrisch erfolgt.

Der zweite Körper könnte auch durch einen entsprechenden Spiegel ersetzt sein.

Es versteht sich, daß auch andere optische Elemente, wie beispielsweise Penta-Prismen oder Wollaston-Prismen, in der vorliegenden Erfindung verwendet werden können.

**Patentansprüche**

1. Verfahren zum variablen Abschwächen der Intensität ($I_0$) eines Lichtstrahls (12e; 12e'; 12e"), bei dem man den Lichtstrahl (12e; 12e'; 12e") auf zumindest eine optische Anordnung (14; 14'; 14"), die zumindest einen für den Lichtstrahl transparenten Körper (16; 16'; 16") aufweist, richtet, derart, daß der Lichtstrahl (12e; 12e'; 12e") durch eine Lichteinfallsfläche (20; 20'; 20") in den zumindest einen Körper (16; 16'; 16") eintritt und durch eine Lichtaustrittsfläche (22; 22'; 22") aus dem zumindest einen Körper (16; 16'; 16") wieder austritt, wobei der zumindest eine Körper (16; 16'; 16") relativ zu dem einfallenden Lichtstrahl (12e; 12e'; 12e") lageverstellt wird, um die Intensität ($I_a$) des austretenden Lichtstrahls (12a; 12a'; 12a") in bezug auf die Intensität ($I_0$) des einfallenden Lichtstrahls (12e; 12e'; 12e") zu ändern, **dadurch gekennzeichnet, daß** man den Lichtstrahl (12e; 12e'; 12e") in dem zumindest einen Körper (16; 16'; 16") zwischen der Lichteinfallsfläche (20; 20'; 20") und der Lichtaustrittsfläche (22; 22'; 22") auf zumindest eine Grenzfläche (24; 24'; 24") zu einem optisch dünneren Medium einfallen läßt, wobei der zumindest eine Körper (16; 16'; 16") relativ zu dem einfallenden Lichtstrahl (12e; 12e'; 12e") so lageverstellt wird, daß der Einfallswinkel ($\varphi_e$) des Lichtstrahls auf die Grenzfläche (24; 24'; 24") auf einen Winkel ($\varphi_g$) eingestellt wird, der kleiner oder größer als der oder gleich dem Grenzwinkel der Totalreflexion an dieser Grenzfläche (24; 24'; 24") ist.

2. Verfahren nach Anspruch 1, **dadurch gekennzeichnet, daß** der zumindest eine Körper (16; 16'; 16") relativ zu dem einfallenden Lichtstrahl (12e; 12e'; 12e") so lageverstellt wird, daß der Einfallswinkel ($\varphi_e$) des Lichtstrahls (12e; 12e'; 12e") auf die Grenzfläche (24; 24'; 24") auf einen Winkel im Bereich von 0° bis zum Grenzwinkel der Totalreflexion eingestellt wird.

3. Verfahren nach Anspruch 1 oder 2, **dadurch gekennzeichnet, daß** man den Lichtstrahl (12) als linear in der Einfallsebene polarisierten Lichtstrahl (12e; 12e'; 12e") auf die Grenzfläche (24; 24'; 24") einfallen läßt, und daß der Körper (16; 16'; 16") relativ zu dem einfallenden Lichtstrahl (12e; 12e'; 12e") so lageverstellt wird, daß der Einfallswinkel ($\varphi_e$) auf die Grenzfläche (24; 24'; 24") auf einen Winkel im Bereich ($\alpha$) zwischen dem Grenzwinkel ($\varphi_g$) der Totalreflexion bis zu dem Brewster-Winkel

($\varphi_p$) an dieser Grenzfläche (24; 24'; 24") eingestellt wird.

4. Verfahren nach einem der Ansprüche 1 bis 3, **dadurch gekennzeichnet, daß** der zumindest eine Körper (16; 16') so lageverstellt wird, daß der aus der Lichtaustrittsfläche (22) austretende Lichtstrahl (12a; 12a') dabei seine räumliche Lage relativ zu dem einfallenden Lichtstrahl (12e; 12e') nicht oder kaum verändert.

5. Verfahren nach Anspruch 4, **dadurch gekennzeichnet, daß** der zumindest eine Körper (16; 16') um eine quer zur Einfallsebene verlaufende Drehachse verschwenkt und quer zu dieser Drehachse translatorisch verschoben wird.

6. Verfahren nach Anspruch 4, **dadurch gekennzeichnet, daß** der zumindest eine Körper (16; 16') ausschließlich um eine quer zur Einfallsebene verlaufende Drehachse (32; 32') verschwenkt wird, die so gewählt ist, daß der aus der Lichtaustrittsfläche (22; 22') austretende Lichtstrahl (12a; 12a') seine räumliche Lage relativ zu dem einfallenden Lichtstrahl (12e; 12e') nicht verändert.

7. Verfahren nach einem der Ansprüche 1 bis 6, **dadurch gekennzeichnet, daß** der aus der Lichtaustrittsfläche (22) austretende Lichtstrahl (12a) mittels eines weiteren optischen Körpers (16") in bezug auf den einfallenden Lichtstrahl (12e) in Abhängigkeit von der Lageverstellung des ersten Körpers (16) in bezug auf seine Lage und/oder in bezug auf die Symmetrie der Abschwächung des Lichtstrahls korrigiert wird.

8. Verfahren nach einem der Ansprüche 4 bis 7, **dadurch gekennzeichnet, daß** als der zumindest eine Körper (16; 16'; 16") ein Prisma (18) konstanter Ablenkung verwendet wird.

9. Vorrichtung zum variablen Abschwächen der Intensität ($I_0$) eines Lichtstrahls (12e; 12e'; 12e"), mit einer optischen Anordnung (14; 14'; 14"), die zumindest einen für den Lichtstrahl transparenten Körper (16; 16'; 16") aufweist, der eine Lichteinfallsfläche (20; 20'; 20") und eine Lichtaustrittsfläche (22; 22'; 22") aufweist, und wobei der zumindest eine Körper (16; 16'; 16") relativ zu dem einfallenden Lichtstrahl (12e; 12e'; 12e") lageverstellbar ist, um die Intensität ($I_a$) des austretenden Lichtstrahls (12a; 12a'; 12a") in bezug auf die Intensität des einfallenden Lichtstrahls (12e; 12e'; 12e") zu ändern, **dadurch gekennzeichnet, daß** der Körper (16; 16'; 16") außer der Lichteinfallsfläche (20; 20'; 20") und der Lichtaustrittsfläche (22; 22'; 22") zumindest eine Grenzfläche (24; 24'; 24") zu einem optisch dünneren Medium aufweist, wobei der zumindest eine Körper (16; 16'; 16") so lageverstellbar ist, daß der Einfallswinkel ($\varphi_e$) des Lichtstrahls (12e; 12e'; 12e") auf die Grenzfläche (24; 24'; 24") auf einen Winkel einstellbar ist, der kleiner oder größer als der oder gleich dem Grenzwinkel ($\varphi_g$) der Totalreflexion an dieser Grenzfläche (24; 24'; 24") ist.

10. Vorrichtung nach Anspruch 9, **dadurch gekennzeichnet, daß** dem zumindest einen Körper (16; 16'; 16") ein Stellantrieb zugeordnet ist, der eine Lageverstellung des zumindest einen Körpers (16; 16'; 16") derart ermöglicht, daß der Lichtstrahl (12e; 12e'; 12e") auf die Grenzfläche (24; 24'; 24") unter einem Einfallswinkel ($\varphi_e$) im Bereich zwischen 0° und dem Grenzwinkel ($\varphi_g$) der Totalreflexion einfallen kann.

11. Vorrichtung nach Anspruch 9 oder 10, **dadurch gekennzeichnet, daß** dem zumindest einen Körper (16; 16'; 16") ein Polarisator (34) oder ein Element zur Drehung der Polarisationsebene vorgeschaltet ist, der den einfallenden Lichtstrahl (12e; 12e'; 12e") linear parallel oder senkrecht zur Einfallsebene polarisiert.

12. Vorrichtung nach einem der Ansprüche 9 bis 11, **dadurch gekennzeichnet, daß** der zumindest eine Körper (16; 16') um eine quer zur Einfallsebene des Lichtstrahls (12e; 12e') verlaufende Drehachse drehbar und quer zu dieser Drehachse translatorisch beweglich ist.

13. Vorrichtung nach einem der Ansprüche 9 bis 12, **dadurch gekennzeichnet, daß** der zumindest eine Körper (16; 16') um eine quer zur Einfallsebene des Lichtstrahls (12e; 12e') verlaufende Drehachse (32; 32') drehbar ist, die so gewählt ist, daß der aus der Lichtaustrittsfläche (22; 22') austretende Lichtstrahl (12a; 12a') seine räumliche Lage relativ zu dem einfallenden Lichtstrahl (12e; 12e') nicht oder kaum ändert.

14. Vorrichtung nach einem der Ansprüche 9 bis 13, **dadurch gekennzeichnet, daß** der zumindest eine Körper (16; 16'; 16") ein Prisma (18; 18'; 18") ist.

15. Vorrichtung nach einem der Ansprüche 9 bis 14, **dadurch gekennzeichnet, daß** der zumindest eine Körper (16; 16'; 16") ein Prisma (18; 18'; 18") konstanter Ablenkung ist.

16. Vorrichtung nach Anspruch 15, **dadurch gekennzeichnet, daß** der zumindest eine Körper (16; 16'; 16") ein rechtwinkliges Prisma (18; 18'; 18") ist.

17. Vorrichtung nach Anspruch 15 oder 16, **dadurch gekennzeichnet, daß** der zumindest eine Körper (16; 16") ein gleichschenklig-rechtwinkliges Prisma (18; 18") ist.

18. Vorrichtung nach Anspruch 17, **dadurch gekennzeichnet, daß** das Prisma (18; 18'; 18") aus einem Material mit einem Brechungsindex von größer oder gleich $2^{0,5}$ ist.

19. Vorrichtung nach einem der Ansprüche 9 bis 18, **dadurch gekennzeichnet, daß** die Lichteinfallsfläche (20; 20'; 20") mit einer Antireflexbeschichtung oder einer Antireflexmikrostrukturierung versehen ist, oder eine derartige Formgebung aufweist, daß sie zum einfallenden Lichtstrahl (12e; 12e'; 12e") unter dem Brewsterwinkel angeordnet ist.

20. Vorrichtung nach einem der Ansprüche 9 bis 19, **dadurch gekennzeichnet, daß** die Grenzfläche (24; 24'; 24") mit einer Beschichtung oder Mikrostrukturierung zur Modifikation des Verlaufs der Kurve des Reflexionskoeffizienten R in Abhängigkeit vom Einfallswinkel ($\varphi_e$) an der Grenzfläche (24; 24'; 24") versehen ist.

21. Vorrichtung nach einem der Ansprüche 9 bis 20, **dadurch gekennzeichnet, daß** der Körper (16; 16'; 16") aus Calciumfluorid besteht.

Fig.1

Fig.2

Fig.3

Fig.4

Fig.5

Fig.6

Fig.7